# EUROPEAN PATENT APPLICATION

(11) **EP 4 814 726 A1**
(43) Date of publication of application: **30.09.2026**
(21) Application number: 25167150.9
(22) Date of filing: 28.03.2025
(51) Int. Cl.: G06F 11/3668, G06F 11/3698

(54) **METHOD AND SYSTEM FOR INTEGRATION TESTING A SOFTWARE APPLICATION**

(71) Applicant: British Telecommunications Public Limited Company, London E1 8EE (GB)
(72) Inventor: NOPPEN, Johannes, London, El 8EE (GB); ZIOLKOWSKI, Adam, London, El 8EE (GB); JOHNS, Jack, London, El 8EE (GB)
(74) Representative: British Telecommunications public limited company Intellectual Property Department

(57) **Abstract**

A computer-implemented method for integration testing a software application, the method comprising: receiving, at a Data Processing System, DPS, data comprising executable code for a plurality of tests, wherein each test from the plurality of tests is for testing a part of the software application; receiving, at the DPS, quality data that quantifies the quality of different parts of the software application based on a software quality model; receiving, at the DPS, historical data, wherein the historical data comprises information of previous executions of tests on the software application; determining, by the DPS, a score for each test of the plurality of tests based on the historical data and the quality data, to quantify the effectiveness of each test of the plurality of tests on the parts of the software application; determining, by the DPS, an order in which the plurality of tests is to be performed based on the score for each test and the quality data; and outputting, by the DPS, a schedule for use in the integration testing of the software application, wherein the schedule includes the order in which the plurality of tests is to be performed.

## Description

### FIELD

The present disclosure relates to a method and a system for integration testing of a software application.

### BACKGROUND

Software testing is an important part of software development. Software testing is performed continuously during the development of a new software application, to ensure that any new developments perform as the requirements expect. In modern software development methods, automated tests are used for software testing.

The automated tests are run frequently throughout the software development cycle to surface any potential issues with the new developments as quickly as possible. This tends to require automated tests to be executable in a reasonable amount of time, so that feedback can be investigated and actioned. A lack of a set of automated tests covering all areas of a project tends to be a blocker in any agile process. Two of the most important types of automated testing are unit tests and integration tests.

A unit test is performed on a small and isolated part of the code, for example on a single project area. This makes unit tests inexpensive to run, and therefore they can be run frequently. However, as they are only tested on a single project area, unit tests cannot be used to establish that the requirements of the project as a whole are achieved.

Integration tests are performed on large amounts of the code, for example on the project as a whole. As such, integration tests can be used to establish that the requirements of the project as a whole are achieved. Because of this, integration tests are also generally more expensive to execute, both computationally and time wise, due to their scale and complexity. This often results in integration testing being performed at a late stage in software development cycle, for example once a large part the software application has been developed. As such, any defects found during the integration testing tend to be expensive to fix.

### SUMMARY

In an aspect, there is provided a computer-implemented method for integration testing a software application, the method comprising: receiving, at a Data Processing System, DPS, data comprising executable code for a plurality of tests, wherein each test from the plurality of tests is for testing a part of the software application; receiving, at the DPS, quality data that quantifies the quality of different parts of the software application based on a software quality model; receiving, at the DPS, historical data, wherein the historical data comprises information of previous executions of tests (e.g., the plurality of tests) on the software application; determining, by the DPS, a score for each test of the plurality of tests based on the historical data and the quality data, to quantify the effectiveness of each test of the plurality of tests on the parts of the software application; determining, by the DPS, an order in which the plurality of tests is to be performed based on the score for each test and the quality data (for example by prioritising tests that scored highly for testing parts of the software application that have been quantified by the quality data to be of a lower quality); and outputting, by the DPS, a schedule for use in the integration testing of the software application, wherein the schedule includes the order in which the plurality of tests are to be performed.

The plurality of tests may be a plurality of integration tests. Each integration test in the plurality of integration tests may be for executing against more than one part of the software application. Each integration test in the plurality of integration tests may cover a respective execution path through the part of the software application against which it executes. Each integration test in the plurality of integration tests may be associated with one or more assertions of system behaviour.

The method may comprise selecting one or more integration tests from the plurality of integration tests (for example, based on their scores). The method may comprise determining an order for the selected one or more integration tests (for example, based on their scores).

Prioritising tests that are for testing lower quality parts of the software tends to maximise the number of tests that cover areas of the software application that are lower in quality. This also tends to ensure that the most important feedback on the software application is received from the tests in the shortest possible time. Using the output of a software quality model and historical data in this manner tends to be an effective way of finding areas for improvement.

The historical data may comprise information of a previous execution of only one test of the plurality of tests on the software application. The historical data may comprise information of previous executions of only some of the tests of the plurality of tests on the software application. The historical data may comprise information of previous executions of each test of the plurality of tests on the software application.

The plurality of tests may be a plurality of integration tests or a plurality of unit tests.

The method may further comprise performing, by the DPS, the integration testing of the software application by executing the tests as specified in the schedule.

The execution of the tests may be performed on the DPS, or on a system controlled by the DPS.

The method may further comprise: receiving, at the DPS, availability data that specifies computational resources that are available on a system for performing the plurality of tests; and allocating, by the DPS, for each test of the plurality of tests, a computational budget from the available computational resources based on the score for each test and the historical data; wherein the schedule includes the estimated computational budget for each test.

Because computational resources are allocated based on the score, computational resources that may be limited on the system can be prioritised for different tests of the plurality of tests. This tends to improve the effectiveness of the integration testing.

The step of allocating for each test a computational budget may comprise using an evolutionary or heuristic based optimisation technique.

The DPS may comprise the system that has the computational resources available for performing the plurality of tests.

The system that has the computational resources available for performing the plurality of tests may be separate to the DPS. The system may be communicatively coupled to the DPS. The system may be controlled by the DPS.

The step of determining a score for each test of the plurality of tests may comprise: determining a higher score for tests that are for testing parts of the software application that have been quantified by the quality data to be of a lower quality; and determining a lower score for tests that are for testing parts of the software application that have been quantified by the quality data to be of a higher quality.

The tests that have a higher score may be allocated a greater proportion of the available computational resources.

By determining a lower score for tests that are for testing higher quality parts of the software application, and a higher score for tests that are for testing lower quality parts of the software application, the parts of the software application that are of a lower quality are prioritised (as specified in the schedule) in the integration testing over the parts of the software application that are of a higher quality. This tends to allow resources to be focused, during the integration testing, on parts of the software application that require more attention because they are of a lower quality.

The computational resources available on the system may include a desired runtime and/or a desired computational cost.

A developer or another program can implement limitations on the integration testing by specifying the limitations in the computational resources. Thus, specifying the desired runtime and the desired computational cost in the available computational resources tends to be an effective way of controlling operational parameters of the integration testing.

The computational budget may include a computational cost and an estimated runtime.

Because the schedule may include the computational budget, any application or developer that executes the plurality of tests in accordance with the schedule tends to be informed of the computational cost and estimated runtime for the integration testing. This tends to be useful in planning and optimising the running of integration testing.

The data comprising executable code for the plurality of tests may further comprise annotations that provide context to the respective test.

The method may further comprise grouping, by the DPS, the tests of the plurality of tests into suites of tests based on the annotations.

The schedule may include information on how each of the plurality of tests are grouped into the suites of tests.

The historical data may comprise one or more of: a list of tests previously executed; lines of source code of the software application that the previously executed tests covered; for each previously executed test, an indication as to whether that previously executed test was passed or failed; for each previously executed test, profiling information specifying a time taken to execute the previously executed test; and/or for each previously executed test, an indication of computer resources that were utilised in the performance of that previously executed test.

In this manner, the historical data tends to be able to provide context of how each test of the plurality of tests has historically interacted with different parts of the software application. This tends to be useful in determining how further unit or integration tests may be executed.

The historical data may further comprise a history of modifications to the software application.

The historical data may be in a machine-readable format.

The quality data may include one or more types of information selected from the group of information types consisting of: information regarding a quality of different parts of the source code of the software application; information specifying an architectural quality of the software application; information specifying a quality of Artificial Intelligence, Al, components in the software application; information specifying defects in system components; and information specifying a risk of defects in the system.

The quality data may be in a machine-readable format, such as a JavaScript Object Notation (JSON) file.

The method may further comprise: determining, by the DPS, whether there has been a modification to the software application; and in response to determining that there has been a modification to the software application, re-performing, by the DPS, the method of any preceding claim; wherein the step of determining whether there has been a modification of the software application and re-performing the method of any claim is continued until it is determined that there has not been a modification to the software application.

The determination of whether there has been a modification of the software application may be performed based on the historical data.

In a further aspect, there is provided a Data Processing System, DPS, for integration testing a software application, the DPS comprising: a processor; and a memory coupled to the processor; wherein the DPS is configured to: receive data comprising executable code for a plurality of tests, wherein each test from the plurality of tests is for testing a part of the software application; receive quality data that quantifies the quality of different parts of the software based on a software quality model; receive historical data, wherein the historical data comprises information of previous executions of the plurality of tests on the software application; determine a score for each test of the plurality of tests based on the historical data and the quality data, to quantify the effectiveness of each test of the plurality of tests on the parts of the software application; determine an order in which the plurality of tests is to be performed based on the score for each test and the quality data, by prioritising tests that scored highly for testing parts of the software application that have been quantified by the quality data to be of a lower quality; and output a schedule for use in the integration testing of the software application, wherein the schedule includes the order in which the plurality of tests are to be performed.

In a further aspect there is provided a computer program element comprising computer program code to, when loaded into a computer system and executed thereon, cause the computer to perform the steps of a method as described herein.

### BRIEF DESCRIPTION OF THE FIGURES

Aspects of the present disclosure will now be described by way of example with reference to the accompanying figures. In the figures:
Figure 1 is a diagram showing unit and integration testing of a software application;
Figure 2 is a data flow diagram showing a data flow and certain method steps for integration testing a software application;
Figure 3 is a diagram showing a method for integration testing a software application; and
Figure 4 schematically illustrates an example data processing system capable of performing any of the methods of the invention.

### DETAILED DESCRIPTION

Modern agile practice dictates that engineers should write suites of automated tests that can be run frequently and efficiently, throughout the development cycle, to surface issues as quickly as possible. This also requires such test suites to be executable in a reasonable amount of time, so that feedback can be investigated and actioned.

There are various types of software tests. Two of the main types of software tests are units test and integration tests, as discussed above. There will generally be many unit tests for a project. In contrast, integration tests will execute large amounts of the code and executions will span many different areas of the project. While unit tests tend to be inexpensive to run, and can therefore be run very frequently, integration tests are generally a lot more expensive to execute, both computationally and time wise. This often results in integration testing only being executed once the large majority of a change or development has been made to the software application. However, this in turn tends to make any defects found during integration testing expensive to fix.

The invention disclosed herein tends to optimize the process of executing integration tests on a software application, by ordering the tests based on the output of a software quality model, previously recorded test reports and the history of modifications to the software application.

In addition, the invention produces a schedule or a test plan for execution, that tends to be optimised with regards to available computational resources. The available computational resources may be specified by a developer or another software application. The available computational resources may include desired limitations on the integration testing such as time periods (i.e., the desired time by which the testing should be complete). Such limitations may be selected on the basis that the resultant testing would be considered acceptable for that phase in the development of the software application.

Benefits of this invention tend to be that the execution of integration tests happen in a more streamlined, efficient and optimal manner resulting in feedback being delivered more quickly. This tends to give more time for the feedback to be acted upon, reducing the cost of fixing defects. The amount of computational resource necessary for executing integration tests on a day-to-day basis tends to be optimised to focus on the lower quality parts of the software application, which prevents re-testing of high-quality parts of the software application. This tends to save on computational resources necessary to repeatedly run integration tests.

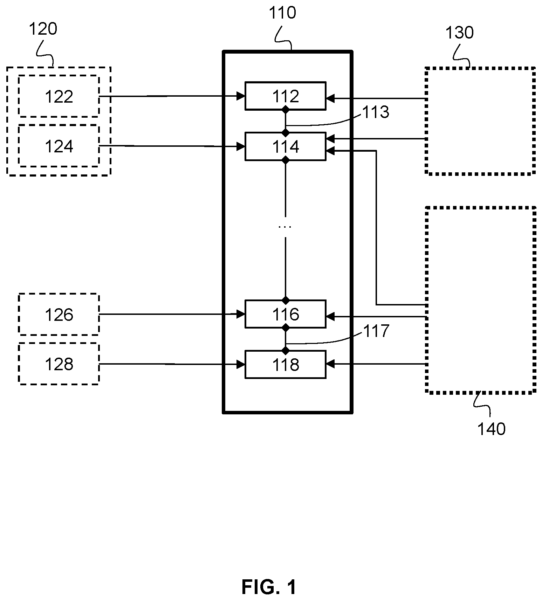

Figure 1 is a diagram showing a data flow for unit and integration testing of a software application 110. The software application 110 is built up of software parts 112, 114, 116, 118. The software application 110 may include any number of software parts. In this embodiment the software application 110 includes a first software part 112, a second software part 114, a third software part 116, and a fourth software part 118.

Each of the software parts 112, 114, 116, 118 include source code that is for providing particular functionality to the software application 110. The software parts 112, 114, 116, 118 may be communicatively linked such that data or information can be passed between the software parts 112, 114, 116, 118. In this embodiment, the first and second software parts 112, 114 are linked by a first connection 113; and the third and fourth software parts 116, 118 are linked by a second connection 117.

In this embodiment, the first software part 112 provides a first function to the software application 110. Output of the first function is provided to the second software part 114 via the first connection 113. The second software part 114 provides a second function to the software application 110. The second software part 114 uses the output from the first function in the processing of the second function. In this manner, different software parts can pass data or information between themselves to provide more advanced functionality to the software application 110.

A unit test is used to test each individual software part 112, 114, 116, 118. In this embodiment, a first unit test 122 is for testing the first software part 112, a second unit test 124 is for testing the second software part 114, a third unit test 126 is for testing the third software part 116, and a fourth unit test 128 is for testing the fourth software part 118. When a unit test 122, 124, 126, 128 is performed, it isolates the respective software part that it is testing and simulates any data that would flow into or out of the respective software part (i.e., data that would flow through the connections 113, 117). As a result of this, testing each software part 112, 114, 116, 118 in isolation tends to be straightforward. The unit tests may be grouped together into suites based on the software parts which they are for testing. In this embodiment, the first and second unit tests 122, 124 are grouped into a unit test suite 120.

Although in this embodiment, each unit test 122, 124, 126, 128 is for testing a different software part 112, 114, 116, 118 of the software application 110, embodiments of the invention should not be limited thereto.

In this embodiment, there is also a library, suite or plurality of integration tests, such as a first integration test 130 and a second integration test 140. While unit tests each cover a specific part of the system (i.e., unit tests execute against specific individual software parts respectively), integration tests in contrast each cover more than one part of the system (i.e. integration tests execute against more than one part of the system) and cover a given execution path through these parts.

In this embodiment, the first integration test 130 is for testing the first and second software parts 112, 114, with a defined execution path therethrough and some defined assertions on behaviour. Similarly, the second integration test 140 is for testing the second, third and fourth software parts 114, 116, 118, with a defined execution path therethrough and some defined assertions on behaviour.

It is to be understood that the number of software parts presented in this embodiment is merely for the purpose of illustrating the invention by way of an example. In practice, there may be any number of software parts and any number of unit tests and/or integration tests. The integration tests may cover any number of the software parts.

In accordance with the invention, a schedule is determined for use in the execution of integration tests 130, 140. The schedule specifies which integration tests will be executed and the order in which the integration tests 130, 140 are to be performed. An allocated computational budget for each integration test 130, 140 may be specified.

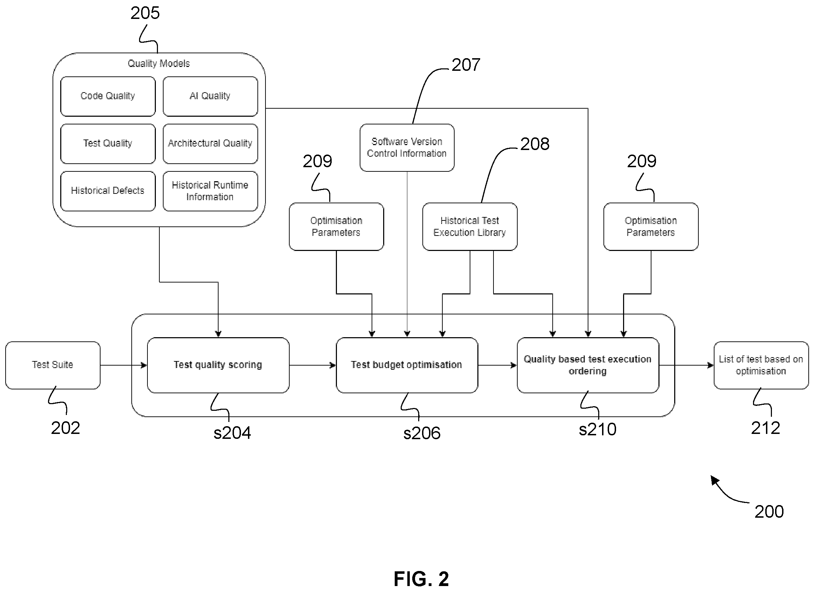

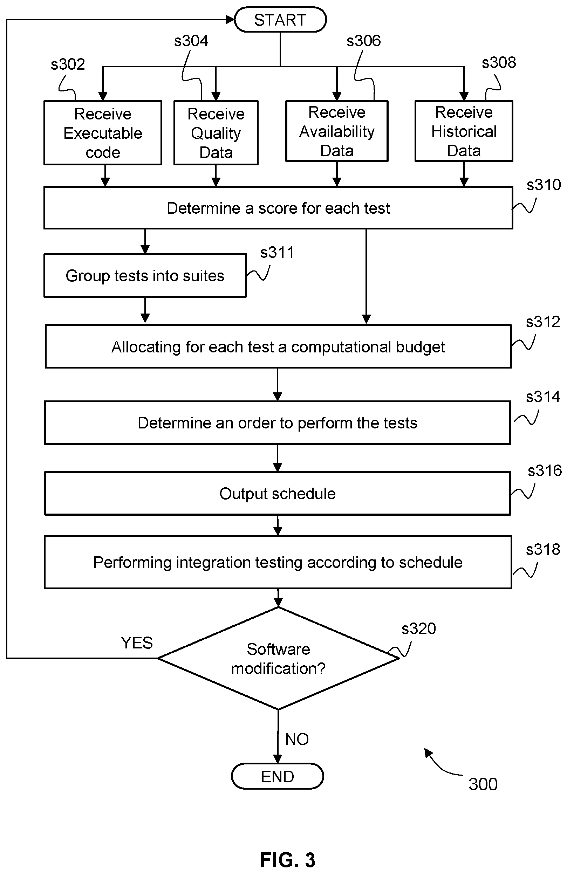

Figure 2 is a data flow diagram 200 that shows data and certain method steps for integration testing of the software application 110. Certain method steps shown in Figure 2 are explained in more detail later below in relation to Figure 3.

The data that is involved in the data flow diagram 200 includes executable code 202, quality data 205, software version control information 207, historical data 208, and availability data 209.

The executable code 202 is the code used to execute the integration tests 130, 140. The executable code 202 is annotated in such a way that the integration tests can be grouped into suites of tests based on the annotations.

The quality data 205 is an output from a software quality model. The quality of a software system is important for many reasons, including but not limited to ensuring a fault free experience for users, ensuring that the system conforms to its requirements and ensuring that the software architecture is adequately sound to support future changes in an easy and inexpensive manner. Measuring software quality involves measuring many parameters, such as code metrics, development activities, runtime information and many more parameters. Alongside this, the quality model tends to provide a framework for interpreting these metrics together and allows for comparisons to be made against other systems. The software quality model is thus a set of relationships between desired quality properties (as may be specified by a developer) and the actual properties of the software application 110. In this embodiment, mapping information that is provided in the software quality model has been used with measurements of performance of the software application 110 to determine the quality data 205. For example, quality information may be provided relating to the 'complexity' of one of the software parts 112, 114, 116, 118. A more complicated software part 112, 114, 116, 118 may be more 'complex' compared to a less complicated software part 112, 114, 116, 118.

In this embodiment, the quality data 205 is the output from applying the software quality model to the software application 110. In this embodiment, the quality data 205 includes information regarding a quality of different parts of the source code of the software application 110; information specifying an architectural quality of the software application 110; information specifying a quality of Al components in the software application 110; information specifying defects in parts of the software application 110; information specifying a risk of defects in the software application 110.

The quality data 205 may be in a machine-readable format, such as a JavaScript Object Notation (JSON) file.

The historical data 208 includes a list of unit and/or integration tests previously executed in the form of a historical test execution library; lines of source code of the software application 110 that the previously executed tests covered; for each previously executed test, an indication as to whether that previously executed test was passed or failed; for each previously executed test, profiling information specifying a time taken to execute the previously executed test; and for each previously executed test, an indication of computer resources that were utilised in the performance of that previously executed test.

In this manner, the historical data 208 tends to be able to provide context of how one or more of the unit tests 122, 124, 126, 128 and/or the integration tests 130, 140 has historically interacted with the different software parts 112, 114, 116, 118 of the software application 110. In other words, the historical data 208 may comprise information about past integration and/or unit test executions. This tends to be useful in determining how future integration tests may be executed. The historical data 208 may be used to determine or optimise which integration tests are to be executed.

The software version control information 207 includes information on previous versions of the software application 110. Version control systems are an important aspect of software development. Software projects tend to involve multiple developers collaborating together, each providing small code modifications or additions. To help manage these contributions and ensure that each developer is able to work effectively, version control systems are used to manage code contributions. These systems keep track of code contributions and where necessary will help developers resolve conflicting code changes. As part of this, a full history of the modifications to a software project is recorded and available to query.

The historical data 208 may comprise the software version control information 207. The historical data 208 may be in a machine-readable format.

The availability data 209 specifies what resources are available on a system to execute the integration test 130, 140. The availability data 209 includes optimisation parameters that define a desired runtime and/or a desired compute cost of executing the integration test 130, 140. In this manner, a developer or another program can implement limitations on the integration testing by specifying the limitations in the computational resources included in the availability data 209. Thus, specifying the desired runtime and the desired computational cost in the availability data 209 tends to be an effective way of controlling operational parameters of the integration testing.

The executable code 202 and the quality data 205 are used in a scoring step s204, as discussed in more detail later below in relation to step s310 shown in Figure 3.

An output from the scoring step s204, the software version control information 207, the historical test execution library included in the historical data 208, and the optimisation parameters included in the availability data 209 are used in a step s206 to allocate for each test in a library of integration tests 130, 140 a computational budget, as discussed in more detail later below in relation to step s312 shown in Figure 3.

The output from the step s206, the quality data 205, the optimisation parameters included in the availability data 209, and the historical test execution library included in the historical data 208 are used in a step s210 to determine an order for the integration tests 130, 140, as discussed in more detail later below in relation to step s314 shown in Figure 3.

The output of the step s210 is a list of tests 212, as discussed in more detail later below in relation to step s316 shown in Figure 3.

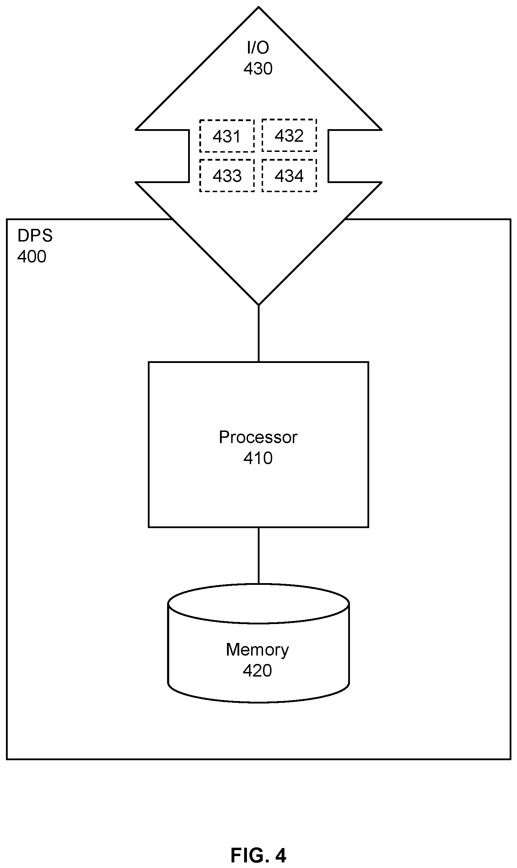

Figure 3 shows a method 300 for integration testing of the software application 110. The method may be performed by a data processing system (DPS) 400 as described in Figure 4 later below. The method 300 may be a computer-implemented method. In this example, a library, suite, or plurality of integration tests is provided. The method 300 is for determining which integration tests from the plurality of integration tests should be performed. The method is also for determining an order (e.g. an optimum order) in which to perform the selected tests.

At a step s302, the DPS 400 receives data comprising executable code for executing the plurality of integration tests.

At a step s304, the DPS 400 receives quality data that quantifies the quality of the different software parts 112, 114, 116, 118 of the software application 110 based on a software quality model.

At a step s306, the DPS 400 receives availability data that specifies the computational resources that are available for performing the integration tests. The availability data includes operational parameters that specify a desired runtime and a desired computational cost of performing the integration tests.

In this embodiment, the system that has the computational resources available for performing the integration tests is separate to the DPS 400. This system is not shown in the figures. The system is communicatively coupled to the DPS 400, and is controlled by the DPS 400.

In other embodiments, the DPS 400 may comprise the system that has the computational resources available for performing the integration tests.

At a step s308, the DPS 400 receives historical data. The historical data comprises information of previous executions of unit tests 122, 124, 126, 128 and/or of previous executions of the integration tests 130, 140 on the software application 110. Including coverage results from unit testing in the method tends to provide an indication for how well certain areas of the software application 110 are already tested.

At a step s310, the DPS 400 determines a score for each integration test of the integration test library (i.e. the plurality of integration tests) based on the historical data and the quality data. The score is a means of quantifying the effectiveness of each integration test on the software application 110.

In performing step s310, the DPS 400 determines a higher score for integration tests that are for testing parts of the software application 110 that have been quantified by the quality data to be of a lower quality; and determining a lower score for tests that are for testing parts of the software application 110 that have been quantified by the quality data to be of a higher quality. The DPS 400 establishes the source code of the software parts 112, 114, 116, 118 that each integration test covers (i.e., is for testing) based on the historical data.

In this embodiment, the method 300 comprises, at a step s311, grouping some of the integration tests into groups or suites of integration tests based on the annotations. Because the executable code may be annotated, the DPS 400 is able to group the integration tests into groups based on the annotations. This may comprise, for example, grouping together some of the integration tests that have been annotated as testing a particular function of the software application 110.

Thus, each of the integration tests in that particular group may be considered together in subsequent steps of the method 300, rather than considering each of the integration tests in isolation. This tends to improve the overall efficiency of allocation of resources and ordering of the integration tests.

At a step s312, the DPS 400 allocates, for each integration test, a computational budget from the available computational resources based on the score for each integration test and the historical data. The integration tests that have a higher score are allocated a greater proportion of the available computational resources.

By determining a lower score for integration tests that are for testing higher quality parts of the software application 110, and a higher score for integration tests that are for testing lower quality parts of the software application 110, the parts of the software application that are of a lower quality can be prioritised in the integration testing over the parts of the software application 110 that are of a higher quality. This tends to allow resources to be focused, during the integration testing, on parts of the software application 110 that require more attention because they are of a lower quality.

The output of the step s312 is a computational budget for each integration test. Each computational budget includes a computational cost and an estimated runtime. This information tends to be useful for any application or developer that executes the integration tests as it may be useful in planning and optimising the running of integration testing.

Because computational resources are allocated based on the score, computational resources that may be limited on the system can be prioritised for different tests of the integration test 130. This tends to improve the effectiveness of the integration testing.

The step of allocating for each test a computational budget may comprise using an evolutionary or heuristic based optimisation technique.

At a step s314, the DPS 400 determines an order in which each integration test is to be performed based on the score for each integration test, the quality data, and operational parameters included in the availability data. In determining the order, the DPS 400 prioritises integration tests that scored highly for testing parts of the software application 110 that have been quantified by the quality data to be of a lower quality.

In some embodiments, integration tests (or groups of integration tests) that have scores below a predetermined threshold value may be deselected for performance, i.e. they are not included on the list or schedule of integration tests that is to be performed.

Prioritising integration tests that are for testing lower quality parts of the software tends to maximise the number of tests that cover areas of the software application 110 that are lower in quality. This also tends to ensure that the most important feedback on the software application 110 is received from the tests in the shortest possible time. Using the output of a software quality model and historical data in this manner tends to be an effective way of finding areas for improvement.

At a step s316, the DPS 400 outputs a schedule for use in the integration testing of the software application 110. The schedule includes the order in which each integration test in the group of selected integration tests 130 is to be performed, the estimated computational budget for each integration test, and information on how each integration test is grouped into the suites of integration tests.

In this manner, the invention determines a list of integration tests that should be run, the order in which the integration tests should be run, an estimation of the computational cost of running the integration tests, and an estimation of the time required to execute the integration tests. These outputs will be in a machine consumable format, such as JSON.

The output of the step s316 can be consumed by another automated processes, running in a continuous integration environment, to perform the execution of integration tests.

In this embodiment, at a step s318, the DPS 400 performs the integration testing of the software application 100 by executing each integration test as specified in the schedule. As discussed above, in this embodiment the system that has the computational resources available for performing the integration test 130 is separate to the DPS 400 (not shown in the figures). The system is communicatively coupled to the DPS 400, and is controlled by the DPS 400. Thus, the execution of each integration test is performed by the DPS 400 controlling the system.

At a step s320, the DPS 400 determines whether there has been a modification to the software application 110. The determination of whether there has been a modification of the software application 110 may be performed based on the historical data.

In response to determining that there has been a modification to the software application 110, the DPS 400 then re-performs the method steps s302 to s320. The step s320 of determining whether there has been a modification of the software application 110 and re-performing method steps s302 to s320 is continued until it is determined, at step s320, that there has not been a modification to the software application 110.

The benefits of the invention tend to be that integration tests are executed in streamlined, efficient and optimal manner resulting in feedback being delivered more quickly and giving greater opportunity for the feedback to be acted upon sooner. This tends to reduce the cost of fixing defects. Additionally, the amount of compute necessary for executing integration tests tends to be optimised for saving money on compute resources necessary to repeatedly run integration tests.

Figure 4 schematically illustrates an example data processing system (DPS) 400 capable of performing any of the methods described above. The DPS 400 comprises a processor 410 operably coupled to both a memory 420 and an interface (I/O) 430.

The memory 420 can optionally comprise computer program instructions which, when executed by the processor 410, cause the data processing system 400 to carry out any of the methods described above.

The interface 430 can optionally comprise one or both of a physical interface 431 configured to receive a data carrier having such instructions stored thereon and a receiver 432 configured to receive a data carrier signal carrying such instructions.

The receiver 432, when present, can be configured to receive messages. It can comprise one or more wireless receiver modules and/or one or more wired receiver modules. The interface 430 can optionally comprise a transmitter 433 configured to transmit messages. The transmitter 433, when present, can comprise one or more wireless transmitter modules and/or one or more wired transmitter modules.

The interface 430 can optionally comprise one or more user interface devices 434.

The preceding description is presented to enable any person skilled in the art to make and use the system and/or perform the method of the invention and is provided in the context of a particular application. Various modifications to the disclosed examples will be readily apparent to those skilled in the art. It is intended that the specification be considered as exemplary only.

The phrase "consisting of" is intended to mean "including only". The word "comprising" is intended to mean "including at least", and therefore includes, in a limiting case, "consisting of".

The terms "top", "bottom", "side", "front", "back", "forward", "rear", "clockwise", "anticlockwise" and other terms describing the orientation of features are not intended to be limiting and, where used, are purely included in order to facilitate the description of the relative location of these features in the context of the accompanying drawings. In use, or during storage, the features may be disposed in other orientations.

Where this application lists one or more method steps, the presence of precursor, follow-on and intervening method steps is not excluded unless such exclusion is explicitly indicated. Similarly, where this application lists one or more components of a device or system, the presence of additional components, whether separate or intervening, is not excluded unless such exclusion is explicitly indicated.

In addition, where this application has listed the steps of a method or procedure in a specific order, it could be possible, or even expedient in certain circumstances, to change the order in which some steps are performed, and it is intended that the particular steps of the method or procedure claims set forth herein not be construed as being order-specific unless such order specificity is expressly stated in the claim. That is, the operations/steps may be performed in any order, unless otherwise specified, and embodiments may include additional or fewer operations/steps than those disclosed herein. It is further contemplated that executing or performing a particular operation/step before, partially or entirely contemporaneously with, or after another operation is in accordance with the described embodiments. For example, steps presented as occurring in series can, given appropriate means (e.g. parallel processors), be implemented in parallel, and vice-versa.

The scope of the present invention includes any novel features or combination of features disclosed herein. The applicant hereby gives notice that new claims may be formulated to such features or combination of features during prosecution of this application or of any further applications derived therefrom. In particular, with reference to the appended claims, features from dependent claims may be combined with those of the independent claims and features from respective independent claims may be combined in any appropriate manner and not merely in the specific combinations enumerated in the claims.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. Such a computer program may be embodied as source code or undergo compilation for implementation on a processing device, apparatus or system or may be embodied as object code, for example.

Such a computer program may be encoded as executable instructions embodied in a carrier medium, non-transitory computer-readable storage device and/or a memory device in machine or device readable form, for example in volatile memory, non-volatile memory, solid-state memory, magnetic memory such as disk or tape, optically or magneto-optically readable memory such as magnetic tape, compact disk (CD), digital versatile disk (DVD) or other media that are capable of storing code and/or data. Such a computer program may alternatively or additionally be supplied from a remote source embodied in a communications medium such as an electronic signal, radio frequency carrier wave or optical carrier wave. Such carrier media are also envisaged as aspects of the present invention.

Such instructions, when executed by a processor (or one or more computers, processors, and/or other devices) may cause the processor (the one or more computers, processors, and/or other devices) to perform at least a portion of the methods described herein.

Where a processor is referred to herein, this is to be understood to refer to a single processor or multiple processors operably connected to one another. Similarly, where a memory is referred to herein, this is to be understood to refer to a single memory or multiple memories operably connected to one another.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, smartphones, tablets, network personal computers (PCs), minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

Resources/computing resources, as referred to herein, comprise time, electrical power, processing power, and memory (both storage and working memory).

User devices can include, without limitation, static user devices such as PCs and mobile user devices such as smartphones, tablets, laptops, and smartwatches.

Receivers and transmitters as described herein may be standalone or may be comprised in transceivers. A communication link as described herein comprises at least one transmitter capable of transmitting data to at least one receiver over one or more wired or wireless communication channels. Wired communication channels can be arranged for electrical or optical transmission. Such a communication link can optionally further comprise one or more relaying transceivers.

User input devices can include, without limitation: microphones, buttons, keypads, touchscreens, touchpads, trackballs, joysticks, mice, gesture control devices and brain control (e.g. electroencephalography, EEG) devices. User output devices can include, without limitation: speakers, buzzers, display screens, projectors, indicator lights, haptic feedback devices and refreshable braille displays. User interface devices can comprise one or more user input devices, one or more user output devices, or both.

## Claims

1. A computer-implemented method for integration testing a software application, the method comprising:
receiving, at a Data Processing System, DPS, data comprising executable code for a plurality of tests, wherein each test from the plurality of tests is for testing a part of the software application;
receiving, at the DPS, quality data that quantifies the quality of different parts of the software application based on a software quality model;
receiving, at the DPS, historical data, wherein the historical data comprises information of previous executions of tests on the software application;
determining, by the DPS, a score for each test of the plurality of tests based on the historical data and the quality data, to quantify the effectiveness of each test of the plurality of tests on the parts of the software application;
determining, by the DPS, an order in which the plurality of tests is to be performed based on the score for each test and the quality data; and
outputting, by the DPS, a schedule for use in the integration testing of the software application, wherein the schedule includes the order in which the plurality of tests is to be performed.

2. The method of claim 1, further comprising:
performing, by the DPS, the integration testing of the software application by executing the tests as specified in the schedule.

3. The method of claim 1 or 2, further comprising:
receiving, at the DPS, availability data that specifies computational resources that are available on a system for performing the plurality of tests; and
allocating, by the DPS, for each test of the plurality of tests, a computational budget from the available computational resources based on the score for each test and the historical data;
wherein the schedule includes the estimated computational budget for each test.

4. The method of claim 3, wherein the step of determining a score for each test of the plurality of tests comprises:
determining a higher score for tests that are for testing parts of the software application that have been quantified by the quality data to be of a lower quality; and
determining a lower score for tests that are for testing parts of the software application that have been quantified by the quality data to be of a higher quality.

5. The method of claim 4, wherein the tests that have a higher score are allocated a greater proportion of the available computational resources.

6. The method of any one of claims 3 to 5, wherein the computational resources available on the system include a desired runtime and/or a desired computational cost.

7. The method of any one of claims 3 to 6, wherein the computational budget includes a computational cost and an estimated runtime.

8. The method of any preceding claim, wherein the data comprising executable code for the plurality of tests further comprises annotations that provide context to the respective test.

9. The method of claim 8, further comprising grouping, by the DPS, the tests of the plurality of tests into suites of tests based on the annotations.

10. The method of claim 9, wherein the schedule includes information on how each of the plurality of tests are grouped into the suites of tests.

11. The method of any preceding claim, wherein the historical data comprises one or more of:
a list of tests previously executed;
lines of source code of the software application that the previously executed tests covered;
for each previously executed test, an indication as to whether that previously executed test was passed or failed;
for each previously executed test, profiling information specifying a time taken to execute the previously executed test; and/or
for each previously executed test, an indication of computer resources that were utilised in the performance of that previously executed test.

12. The method of any preceding claim, wherein the historical data further comprises a history of modifications to the software application.

13. The method of any preceding claim, wherein the quality data includes one or more types of information selected from the group of information types consisting of: information regarding a quality of different parts of the source code of the software application; information specifying an architectural quality of the software application; information specifying a quality of Al components in the software application; information specifying defects in system components; information specifying a risk of defects in the system.

14. The method of any preceding claim, further comprising:
determining, by the DPS, whether there has been a modification to the software application; and
in response to determining that there has been a modification to the software application, re-performing, by the DPS, the method of any preceding claim;
wherein the step of determining whether there has been a modification of the software application and re-performing the method of any claim is continued until it is determined that there has not been a modification to the software application.

15. A Data Processing System, DPS, for integration testing a software application, the DPS comprising:
a processor; and
a memory coupled to the processor;
wherein the DPS is configured to:
receive data comprising executable code for a plurality of tests, wherein each test from the plurality of tests is for testing a part of the software application;
receive quality data that quantifies the quality of different parts of the software based on a software quality model;
receive historical data, wherein the historical data comprises information of previous executions of tests on the software application;
determine a score for each test of the plurality of tests based on the historical data and the quality data, to quantify the effectiveness of each test of the plurality of tests on the parts of the software application;
determine an order in which the plurality of tests is to be performed based on the score for each test and the quality data; and
output a schedule for use in the integration testing of the software application, wherein the schedule includes the order in which the plurality of tests are to be performed.
